# EUROPEAN PATENT SPECIFICATION

(11) **EP 4 216 354 B1**
(45) Date of publication and mention of the grant of the patent: **16.07.2025**
(21) Application number: 22867703.5
(22) Date of filing: 07.09.2022
(51) Int. Cl.: H01M 50/296, H01M 50/249, H01R 13/52, H01R 24/60, H01M 50/521, H01M 10/625, H01M 50/209, H01M 50/24, H01M 50/271, H01R 13/527

(54) **BATTERY MODULE, BATTERY PACK, AND VEHICLE INCLUDING THE SAME**
BATTERIEMODUL, BATTERIEPACK UND FAHRZEUG DAMIT
MODULE DE BATTERIE, BLOC-BATTERIE ET VÉHICULE LES COMPRENANT

(30) Priority: 07.09.2021 KR 20210119358
(43) Date of publication of application: 26.07.2023
(73) Proprietor: LG Energy Solution, Ltd., Seoul 07335 (KR)
(72) Inventor: JUNG, Sang-Eun, Daejeon 34122 (KR); LEE, Chang-Hun, Daejeon 34122 (KR)
(74) Representative: Plasseraud IP
(86) International application number: PCT/KR2022/013462
(87) International publication number: WO 2023/038435

(56) References cited:
- EP-A1- 4 329 062
- JP-A- 2004 171 896
- JP-A- 2016 171 028
- KR-A- 20070 062 287
- KR-A- 20170 012 779
- KR-A- 20210 107 108
- US-A1- 2014 053 402

## Description

### TECHNICAL FIELD

The present disclosure relates to a battery module, a battery pack, and an electric vehicle including the same, and more particularly, to a battery module configured to ensure structural stability even when a thermal event occurs, a battery pack, and a vehicle including the same.

The present application claims priority to Korean Patent Application No. 10-2021-0119358 filed on September 7, 2021, in the Republic of Korea.

### BACKGROUND ART

In recent years, as demand for portable electronic products such as laptops, video cameras, and portable phones has rapidly increased, and the development of electric vehicles, energy storage batteries, robots, satellites, etc. is in full swing, research on repetitive chargeable/dischargeable high-performance secondary batteries is being actively conducted.

Currently commercialized secondary batteries include nickel-cadmium batteries, nickel-hydrogen batteries, nickel-zinc batteries, and lithium secondary batteries. Among them, lithium secondary batteries have almost no memory effect compared to nickel-based secondary batteries, and thus, are in the spotlight for their advantages of being free to charge and discharge, extremely low self-discharge rate, and high energy density.

These lithium secondary batteries mainly use a lithium-based oxide and a carbon material as a positive electrode active material and a negative electrode active material, respectively. Also, these lithium secondary batteries include an electrode assembly in which a positive electrode plate and a negative electrode plate to which a positive electrode active material and a negative electrode active material are applied, respectively, are arranged with a separator therebetween, and an exterior for sealing and storing the electrode assembly together with an electrolyte.

Meanwhile, according to the shape of the battery case, lithium secondary batteries may be classified into can-type secondary batteries in which an electrode assembly is embedded in a metal can and pouch-type secondary batteries in which an electrode assembly is embedded in a pouch of an aluminum laminate sheet.

Here, the pouch of the pouch-type secondary battery may be largely divided into a lower sheet and an upper sheet covering the lower sheet. At this time, an electrode assembly formed by stacking and winding a positive electrode, a negative electrode, and a separator is accommodated in the pouch. In addition, after receiving the electrode assembly, the edges of the upper sheet and the lower sheet are sealed by thermal fusion. In addition, an electrode tab drawn out from each electrode may be coupled to the electrode lead, and an insulating film may be added to a portion of the electrode lead in contact with the sealing portion.

In this way, the pouch-type secondary battery may have the flexibility to be configured in various forms. In addition, the pouch-type secondary battery has the advantage of being able to implement a secondary battery of the same capacity with a smaller volume and mass.

The lithium secondary battery is used as a battery module or a battery pack in which multiple battery cells are overlapped or stacked in a state of mounted on their own or to a cartridge to make a dense structure and then electrically connected to each other to provide high voltage and high current.

In this battery pack configuration, one of the most important issues is safety. In particular, when a thermal event occurs in any one battery module among a plurality of battery modules included in the battery pack, propagation of the event to other battery modules needs to be suppressed. If thermal propagation between the battery modules is not properly suppressed, this may lead to thermal events in other battery modules included in the battery pack, causing bigger problems such as ignition or explosion of the battery pack. Moreover, fire or explosion generated in the battery pack may cause great damage to people or property nearby. Therefore, in such a battery pack, a configuration capable of appropriately controlling the aforementioned thermal event is required.

In particular, a control device such as a BMS (Battery Management System) that controls charging and discharging of the battery module using information such as the voltage of each battery cell constituting the battery module and the temperature of the cell assembly may be connected to the battery module. To connect the control device, it is necessary to install a connector that is electrically connected to each battery cell constituting the battery module and also electrically connected to a temperature sensor for measuring the temperature of the cell assembly.

On the other hand, in a conventional battery module, when a thermal event occurs, there is a problem in that thermal propagation occurs between adjacent battery modules since a flame is exposed at a coupling portion where the connector is connected to a module case.

Document EP4329062 discloses a battery module capable of suppressing flame through a connector in case of internal ignition of known type.

Document US2014053402 discloses an electrical connector assembly of the related art.

### DISCLOSURE

### Technical Problem

The present disclosure is designed to solve the problems of the related art, and therefore the present disclosure is directed to providing a battery module configured to ensure structural stability even when a thermal event occurs, a battery pack, and a vehicle including the same.

However, the technical purpose to be solved by the present disclosure are not limited to the above, and other objects not mentioned herein will be clearly understood by one of ordinary skill in the art from the following disclosure.

### Technical Solution

In one aspect of the present disclosure, there is provided a battery module as defined in the appended claims.

In another aspect of the present disclosure, there is provided a battery pack including at least one battery module according to the present disclosure.

In another aspect of the present disclosure, there is provided a vehicle including at least one battery pack according to the present disclosure.

### Advantageous Effects

According to an embodiment of the present disclosure, the cover of the connector may include a material having strong heat resistance and rigidity. Therefore, it is possible to minimize the discharge of flame generated from one battery module to the outside of the module case. Accordingly, simultaneous ignition between adjacent battery modules may be suppressed.

In addition, according to an embodiment of the present disclosure, blocking of flame emitted from the cell assembly may be performed inside the module case as much as possible.

In addition, according to an embodiment of the present disclosure, simultaneous ignition between a plurality of battery modules may be prevented by minimizing flame transition between the plurality of battery modules.

In addition, various additional effects may be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery module according to an embodiment of the present disclosure.
FIGS. 2 and 3 are diagrams showing a connector provided in the battery module of FIG. 1.
FIG. 4 is a cross-sectional view in the direction A-A' of FIG. 1.
FIG. 5 is a diagram showing the state of the battery module of FIG. 1 during thermal runaway.
FIG. 6 is a diagram showing a battery pack including the battery module of FIG. 1.
FIGS. 7 and 8 are diagrams showing a battery module according to another embodiment of the present disclosure.
FIGS. 9 and 10 are diagrams showing a battery module according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

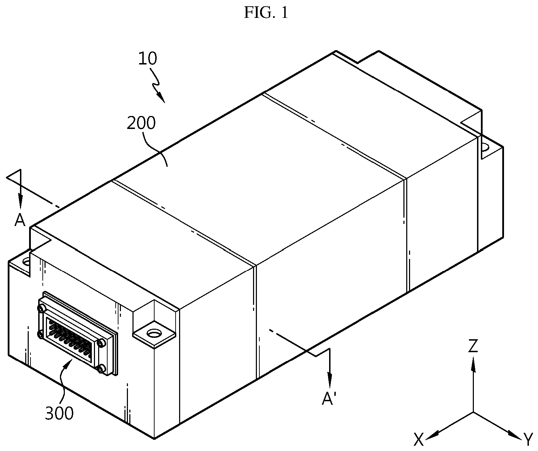

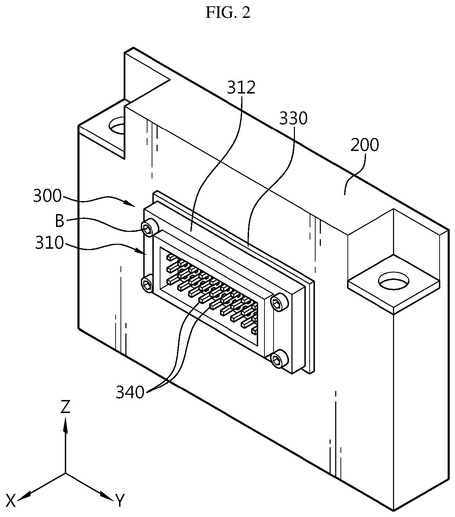

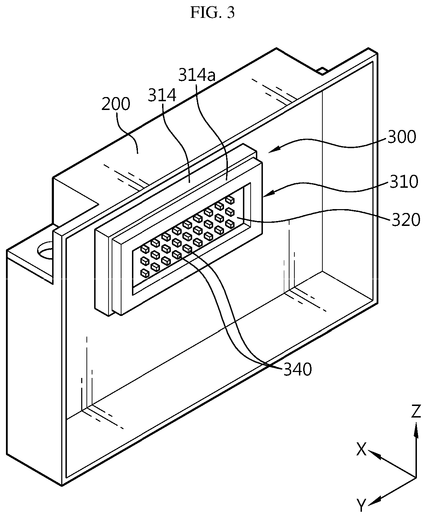

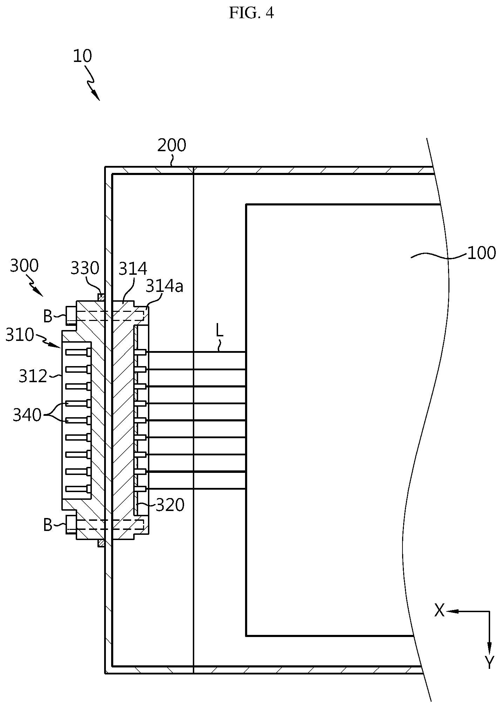

FIG. 1 is a diagram showing a battery module 10 according to an embodiment of the present disclosure, FIGS. 2 and 3 are diagrams showing a connector 300 provided in the battery module 10 of FIG. 1, and FIG. 4 is a cross-sectional view in the direction A-A' of FIG. 1 (in detail, FIG. 4 is a view showing the cross-section of the battery module 10 of FIG. 1 along the line A-A' with respect to the XY plane).

In the embodiment of the present disclosure, the X-axis direction shown in the drawing may mean the front-back direction of the battery module 10 described later, the Y-axis direction may mean the left-right direction of the battery module 200 perpendicular to the X-axis direction and the horizontal plane (XY plane), and Z-axis direction may mean the vertical direction perpendicular to both the X-axis direction and the Y-axis direction.

Referring to FIGS. 1 to 4, a battery module 10 according to an embodiment of the present disclosure includes a cell assembly 100, a module case 200, and a connector 300.

The cell assembly 100 may include at least one battery cell. Here, the battery cell may mean a secondary battery. Such a battery cell may be provided as a pouch-type battery cell, a cylindrical battery cell, or a prismatic battery cell. As an example, the battery cell may be a pouch-type battery cell.

The module case 200 accommodates the cell assembly 100 therein. To this end, an internal accommodating space for accommodating the cell assembly 100 therein may be provided in the module case 200. The module case 200 may include a material having strong heat resistance and rigidity.

The connector 300 is provided in the module case 200. In addition, the connector 300 includes a cover 310 configured to block flame discharged from the cell assembly 100. The connector 300 may be connected to a control device such as a battery management system (BMS, not shown) that controls charging and discharging of the battery module 10 using information such as voltage and temperature of the cell assembly 100. To this end, the connector 300 may be electrically connected to the cell assembly 100 and electrically connected to a temperature sensor (not shown) for measuring the temperature of the cell assembly 100.

In a general battery module, an event such as thermal runaway may occur in a specific battery module. In this case, a high-temperature and high-pressure venting gas may be generated inside the specific battery module, and when this venting gas meets oxygen, a flame may be generated inside or outside the battery pack.

In addition, the flame generated in the battery module has a high risk of being transferred to another battery module adjacent to the specific battery module, and accordingly, simultaneous ignition of multiple battery modules may occur. On the other hand, the conventional battery module has a problem that thermal propagation occurs between adjacent battery modules since a flame is exposed at a portion where a connector is coupled to a module case.

The battery module 10 of the present disclosure may solve the above-described problem by including the connector 300 having the cover 310. The cover 310 of the connector 300 includes a material having strong heat resistance and rigidity, thereby minimizing the discharge of flame generated from one battery module 10 to the outside of the module case 200. Accordingly, simultaneous ignition between adjacent battery modules 10 may be suppressed.

According to this embodiment of the present disclosure, simultaneous ignition between the plurality of battery modules 10 may be prevented by minimizing the flame transition between the plurality of battery modules 10.

Hereinafter, the detailed structure of the aforementioned connector 300 will be described in more detail.

Referring back to FIGS. 2 to 4, the cover 310 includes a first portion 312 and a second portion 314.

The first portion 312 is coupled to the outer surface of the module case 200. As an example, the first portion 312 may include a liquid crystal polymer (LCP) material. The melting point of the liquid crystal polymer may be approximately 280°C.

The second portion 314 is coupled to the inner surface of the module case 200. As an example, the second portion 314 may include a ceramic or aluminum (Al) material. In addition, a heat resistant coating (not shown) may be applied to the outer surface of the second portion 314. The melting point of this heat-resistant coating may be approximately 1,300 °C or higher.

Also, a part of the module case 200 is disposed between the first portion 312 and the second portion 314. That is, the cover 310 of the connector 300 may be configured in a form coupled to the outer surface and the inner surface of the module case 200 with the module case 200 interposed therebetween.

According to this embodiment of the present disclosure, during thermal runaway of the battery module 10, the flame emitted from the cell assembly 100 may be primarily blocked through a part of the cover 310 coupled to the inner surface of the module case 200. In addition, secondarily, the flame may be blocked through the inner surface of the module case 200.

Accordingly, simultaneous ignition between adjacent battery modules 10 may be effectively suppressed.

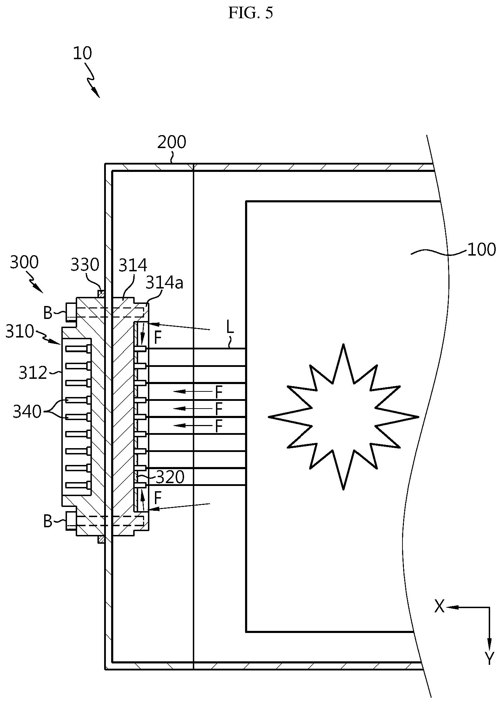

FIG. 5 is a diagram showing the state of the battery module 10 of FIG. 1 during thermal runaway. At this time, the flame to be described later in FIG. 5 will be denoted by the reference sign 'F'.

Referring to FIGS. 2 to 5, the second portion 314 includes a material having higher heat resistance than the first portion 312.

That is, the shape of the second portion 314 may be maintained without being damaged even in a relatively high temperature environment. Therefore, the second portion 314 may not be melted even if the flame discharged from the cell assembly 100 contacts the second portion 314. In addition, the second portion 314 may minimize flame transfer to the first portion 312 disposed on the opposite side with the module case 200 interposed therebetween.

Accordingly, blocking of the flame discharged from the cell assembly 100 may be performed inside the module case 200 as much as possible.

Referring to FIGS. 2 to 5, the connector 300 may further include a heat blocking member 320.

The heat blocking member 320 may be provided on a side surface of the second portion 314 facing the cell assembly 100. As an example, the heat blocking member 320 may include a silicon ceramic potting material. That is, the heat blocking member 320 may include a material with high resistance to flame. The melting point of the heat blocking member 320 may be approximately 1,535°C or higher.

Meanwhile, the heat blocking member 320 may directly contact the flame discharged from the cell assembly 100. In particular, the heat blocking member 320 may minimize the transfer of the flame discharged from the cell assembly 100 to the first portion 312.

According to this embodiment, the flame may be blocked as much as possible inside the module case 200. Accordingly, simultaneous ignition between adjacent battery modules 10 may be suppressed as much as possible.

Referring to FIGS. 3 to 5, the second portion 314 may include a protruding portion 314a.

The protruding portion 314a may protrude from a side surface of the second portion 314 facing the cell assembly 100. Also, the protruding portion 314a may be configured to surround an edge of the heat blocking member 320.

Meanwhile, the flame discharged from the cell assembly 100 may collide with the inner surface of the protruding portion 314a. Accordingly, the protruding portion 314a may guide the flow of the flame discharged from the cell assembly 100 toward the heat blocking member 320.

According to this embodiment, the flow of the flame may be induced toward the heat blocking member 320, which has higher heat resistance than the cover 310 of the connector 300, so that the emission of the flame to the outside of the module case 200 may be more reliably suppressed.

Referring back to FIGS. 2 to 5, the connector 300 may further include a sealing portion 330.

The sealing portion 330 may be configured to seal a gap between the first portion 312 and the module case 200. As an example, the sealing portion 330 may include a graphite sheet (carbon sheet) material. The melting point of the sealing portion 330 may be approximately 1,650°C or higher.

In addition, the sealing portion 330 may be coupled in a form fitted to the edge of the first portion 312.

In particular, the sealing portion 330 may include a material having higher heat resistance than the second portion 314. Accordingly, external exposure of the flame discharged from the cell assembly 100 may be prevented more reliably.

Also, according to this embodiment, it is possible to prevent outside air from being introduced into the module case 200 through the gap between the first portion 312 and the module case 200 even in a high-temperature environment. In addition, it is possible to prevent flame from being discharged to the outside of the module case 200 through the gap between the first portion 312 and the module case 200.

In addition, the sealing portion 330 may be configured to surround the edge of the first portion 312 facing the module case 200. Specifically, the sealing portion 330 may be configured to surround the edge of the first portion 312 facing the module case 200 so as to come into surface contact with the outer surface of the module case 200.

According to this embodiment, the sealing area and the flame blocking area through the sealing portion 330 may be further increased. Accordingly, inflow of outside air into the module case 200 and simultaneous ignition between adjacent battery modules 10 may be more reliably suppressed.

Meanwhile, the connector 300 may further include at least one terminal 340. This terminal 340 may be provided in the cover 310. As an example, the terminal 340 may include a copper (Cu) material. The melting point of this terminal 340 may be approximately 1,083°C.

In addition, one end of the terminal 340 may be exposed to the outside of the cover 310 and connected to the above-described control device. Also, the other end of the terminal 340 may be electrically connected to the cell assembly 100. In one embodiment, the other end of the terminal 340 may be electrically connected to the cell assembly 100 through a separate connection line L. However, it is not limited thereto, and the other end of the terminal 340 may be directly connected to the cell assembly 100.

Although not shown, in the module case 200, a venting hole may be provided in a portion other than the area where the connector 300 is provided. Accordingly, venting gas generated during thermal runaway of the cell assembly 100 may be quickly discharged to the outside of the module case 200 through the venting hole.

Referring again to FIGS. 2 to 5, the connector 300 may further include a coupling member B.

The coupling member B may be configured to penetrate the module case 200 and couple the first portion 312 and the second portion 314 to each other. As an example, the coupling member B may be a wrench bolt, but is not limited thereto.

According to this embodiment, the first portion 312 and the second portion 314 may come into close contact with the outer surface and the inner surface of the module case 200, respectively. Accordingly, the emission of flame to the outside of the module case 200 may be more stably suppressed.

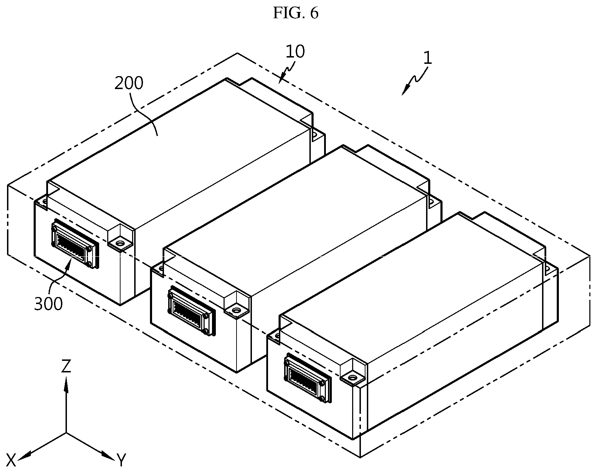

FIG. 6 is a diagram showing a battery pack 1 including the battery module 10 of FIG. 1.

Referring to FIG. 6, a battery pack 1 according to an embodiment of the present disclosure may include at least one battery module 10 described above. Although not shown in detail, the battery pack 1 may further include various devices for controlling charging and discharging of the battery module 10. As an example, the battery pack 1 may further include a battery management system (BMS), a current sensor, and a fuse.

As described above, in the battery module 10 of the present disclosure, exposure of flame to the outside at a portion where the connector 300 is coupled to the module case 200 may be minimized. Accordingly, simultaneous ignition between adjacent battery modules 10 may be suppressed.

In summary, according to the above embodiment of the present disclosure, it is possible to suppress the ignition factor of the battery pack 1 including the plurality of battery modules 10 and to enhance the structural stability of the battery pack 1.

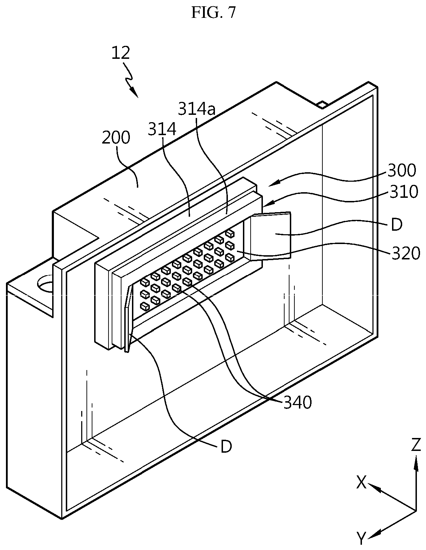

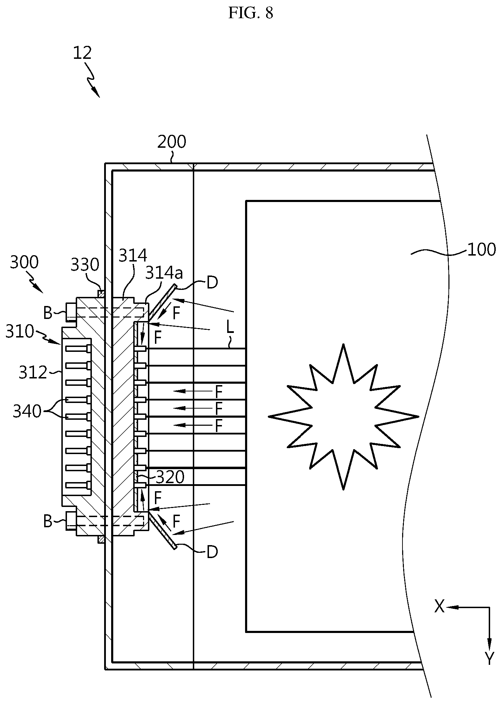

FIGS. 7 and 8 are diagrams showing a battery module 12 according to another embodiment of the present disclosure. At this time, the flame to be described later in FIG. 8 will be denoted with the reference sign 'F'.

Since the battery module 12 according to this embodiment is similar to the battery module 10 of the previous embodiment, redundant description of components substantially the same as or similar to those of the previous embodiment will be omitted, and the following will focus on differences from the previous embodiment.

Referring to FIGS. 7 and 8, in the battery module 12, the connector 300 may further include a bent portion D.

The bent portion D may be formed by bending from the protruding portion 314a toward the cell assembly 100. Specifically, the bent portion D may be bent radially outward toward the cell assembly 100. As an example, the bent portion D may be provided as a pair in the vertical direction (Z-axis direction), but is not limited thereto.

This bent portion D may further weaken the flow of the flame discharged from the cell assembly 100. That is, as shown in FIG. 8, the flame emitted from the cell assembly 100 may be directed toward the heat blocking member 320 while colliding with the side surface of the bent portion D facing the cell assembly 100. In this case, exposure of the flame to the outside of the module case 200 may be blocked more reliably.

According to the battery module 12 according to this embodiment, the flow of the flame discharged from the cell assembly 100 may be weakened, and simultaneous ignition between adjacent battery modules 12 may be more minimized.

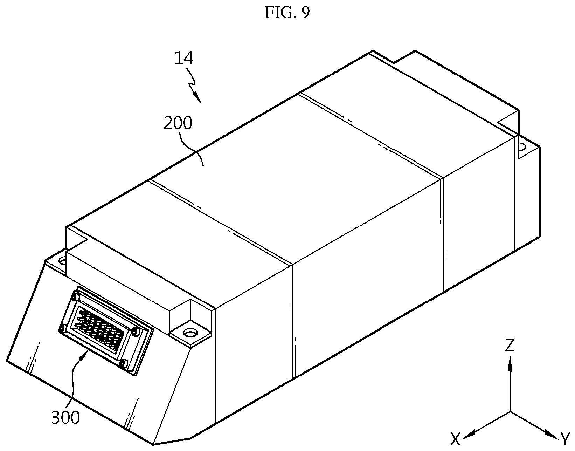

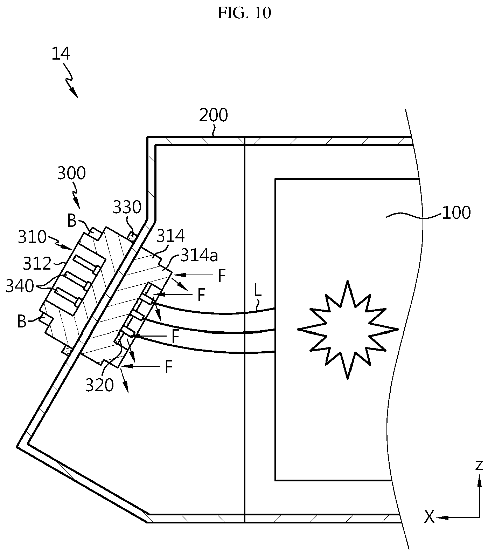

FIGS. 9 and 10 are diagrams showing a battery module 14 according to still another embodiment of the present disclosure. At this time, the flame to be described later in FIG. 10 will be denoted with the reference sign 'F'.

Since the battery module 14 according to this embodiment is similar to the battery module 10 of the previous embodiment, redundant description of components substantially the same as or similar to those of the previous embodiment will be omitted, and the following will focus on differences from the previous embodiment.

Referring to FIGS. 9 and 10, in the battery module 14, the side of the module case 200 including the connector 300 may be inclined downward.

Accordingly, the connector 300 may also be provided in the module case 200 in a downwardly inclined shape.

That is, in the battery module 14 according to this embodiment, the flame discharged from the cell assembly 100 may collide with the second portion 314 configured in a downwardly inclined shape, the heat blocking member 320, and the like, so that the flow of the flame may be bent downward.

In the battery module 14 according to this embodiment, the flow of the flame discharged from the cell assembly 100 may be weakened through the downwardly inclined arrangement of the connector 300, and simultaneous ignition between adjacent battery modules 14 may be further minimized.

Meanwhile, the battery pack 1 according to the present disclosure may be applied to a vehicle such as an electric vehicle. That is, the vehicle according to the present disclosure may include at least one battery pack 1 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

On the other hand, in the present disclosure, terms indicating directions such as up, down, left, right, front, and back are used, but these terms are only for convenience of explanation, and it is obvious to those skilled in the art of the present disclosure that the terms may vary depending on the location of the target object or the location of the observer.

## Claims

1. A battery module (10) comprising:
a cell assembly (100);
a module case (200) for accommodating the cell assembly (100) therein; and
a connector (300) provided in the module case (200) and having a cover (310) configured to block flame discharged from the cell assembly;
wherein the cover includes:
a first portion (312) coupled to an outer surface of the module case (200); and
a second portion (314) coupled to an inner surface of the module case (200),
wherein a part of the module case (200) is disposed between the first portion (312) and the second portion (314),
wherein the second portion (314) includes a material with higher heat resistance than the first portion (312), and
wherein the second portion (314) is disposed on the opposite side with the module case (200) interposed therebetween from the first portion (312).

2. The battery module according to claim 1, wherein the connector (300) further includes a heat blocking member (320) provided on a side of the second portion (314) facing the cell assembly.

3. The battery module according to claim 2, wherein the second portion (314) includes a protruding portion (314a) formed by protruding from the side facing the cell assembly (100) and surrounding an edge of the heat blocking member (320).

4. The battery module according to claim 3, wherein the connector (300) further includes a bent portion (D) formed by bending from the protruding portion (314a) toward the cell assembly (100).

5. The battery module according to claim 1, wherein the connector (300) further includes a sealing portion (330) sealing a gap between the first portion (312) and the module case (200), and
wherein the sealing portion (300) includes a material with higher heat resistance than the second portion (314).

6. The battery module according to claim 5, wherein the sealing portion (330) surrounds an edge of the first portion (312) facing the module case (200).

7. The battery module according to claim 1, wherein the connector (300) further includes a coupling member (B) penetrating the module case (200) and couple the first portion (312) and the second portion (314) to each other.

8. The battery module according to claim 1, wherein a side surface of the module case (200) having the connector (300) is inclined downward.

9. A battery pack comprising at least one battery module according to any one of claims 1 to 8.

10. An electric vehicle comprising at least one battery pack according to claim 9.

## Patentansprüche

1. Batteriemodul (10), umfassend:
eine Zellenanordnung (100);
ein Modulgehäuse (200) zum Aufnehmen der Zellenanordnung (100) darin; und
eine Verbindungseinheit (300), welche in dem Modulgehäuse (200) bereitgestellt ist und eine Abdeckung (310) aufweist, welche dazu eingerichtet ist, eine Flamme zu blockieren, welche von der Zellenanordnung ausgestoßen wird;
wobei die Abdeckung umfasst:
einen ersten Abschnitt (312), welcher mit einer äußeren Fläche des Modulgehäuses (200) gekoppelt ist; und
einen zweiten Abschnitt (314), welcher mit einer inneren Fläche des Modulgehäuses (200) gekoppelt ist,
wobei ein Teil des Modulgehäuses (200) zwischen dem ersten Abschnitt (312) und dem zweiten Abschnitt (314) angeordnet ist,
wobei der zweite Abschnitt (314) ein Material mit einem höheren Wärmewiderstand als der erste Abschnitt (312) umfasst, und
wobei der zweite Abschnitt (314) an der entgegengesetzten Seite von dem ersten Abschnitt (312) angeordnet ist, mit dem Modulgehäuse (200) dazwischen eingefügt.

2. Batteriemodul nach Anspruch 1, wobei die Verbindungseinheit (300) ferner ein Wärmeblockierelement (320) umfasst, welches an einer Seite des zweiten Abschnitts (314) bereitgestellt ist, welche der Zellenanordnung zugewandt ist.

3. Batteriemodul nach Anspruch 2, wobei der zweite Abschnitt (314) einen vorstehenden Abschnitt (314a) umfasst, welcher durch Vorstehen von der Seite, welche der Zellenanordnung (100) zugewandt ist, und Umgeben eines Rands des Wärmeblockierelements (320) gebildet ist.

4. Batteriemodul nach Anspruch 3, wobei die Verbindungseinheit (300) ferner einen gebogenen Abschnitt (D) umfasst, welcher durch Biegen von dem vorstehenden Abschnitt (314a) in Richtung der Zellenanordnung (100) gebildet ist.

5. Batteriemodul nach Anspruch 1, wobei die Verbindungseinheit (300) ferner einen Dichtungsabschnitt (330) umfasst, welcher einen Spalt zwischen dem ersten Abschnitt (312) und dem Modulgehäuse (200) abdichtet, und
wobei der Dichtungsabschnitt (300) ein Material mit einem höheren Wärmewiderstand als der zweite Abschnitt (314) umfasst.

6. Batteriemodul nach Anspruch 5, wobei der Dichtungsabschnitt (330) einen Rand des ersten Abschnitts (312) umgibt, welcher dem Modulgehäuse (200) zugewandt ist.

7. Batteriemodul nach Anspruch 1, wobei die Verbindungseinheit (300) ferner ein Kopplungselement (B) umfasst, welches das Modulgehäuse (200) durchdringt und den ersten Abschnitt (312) und den zweiten Abschnitt (314) miteinander koppelt.

8. Batteriemodul nach Anspruch 1, wobei eine Seitenfläche des Modulgehäuses (200), welche die Verbindungseinheit (300) aufweist, nach unten geneigt ist.

9. Batteriepack, umfassend wenigstens ein Batteriemodul nach einem der Ansprüche 1 bis 8.

10. Elektrofahrzeug, umfassend wenigstens einen Batteriepack nach Anspruch 9.

## Revendications

1. Module de batterie (10) comprenant :
un ensemble de cellules (100) ;
un boîtier de module (200) destiné à accueillir l'ensemble de cellules (100) en son sein ; et
un connecteur (300) disposé dans le boîtier de module (200) et présentant un couvercle (310) configuré pour bloquer une flamme déchargée par l'ensemble de cellules ;
dans lequel le couvercle comporte :
une première partie (312) accouplée à une surface externe du boîtier de module (200) ; et
une deuxième partie (314) accouplée à une surface interne du boîtier de module (200),
dans lequel une partie du boîtier de module (200) est disposée entre la première partie (312) et la deuxième partie (314),
dans lequel la deuxième partie (314) comporte un matériau présentant une résistance à la chaleur plus élevée que la première partie (312), et
dans lequel la deuxième partie (314) est disposée sur le côté opposé avec le boîtier de module (200) interposé entre celle-ci et la première partie (312).

2. Module de batterie selon la revendication 1, dans lequel le connecteur (300) comporte en outre un organe de blocage thermique (320) disposé sur un côté de la deuxième partie (314) faisant face à l'ensemble de cellules.

3. Module de batterie selon la revendication 2, dans lequel la deuxième partie (314) comporte une partie saillante (314a) formée en faisant saillie à partir du côté faisant face à l'ensemble de cellules (100) et entourant un bord de l'organe de blocage thermique (320).

4. Module de batterie selon la revendication 3, dans lequel le connecteur (300) comporte en outre une partie courbée (D) formée par courbure de la partie saillante (314a) vers l'ensemble de cellules (100).

5. Module de batterie selon la revendication 1, dans lequel le connecteur (300) comporte en outre une partie de scellement (330) scellant un espace entre la première partie (312) et le boîtier de module (200), et
dans lequel la partie d'étanchéité (300) comporte un matériau présentant une résistance à la chaleur plus élevée que la deuxième partie (314).

6. Module de batterie selon la revendication 5, dans lequel la partie d'étanchéité (330) entoure un bord de la première partie (312) faisant face au boîtier de module (200).

7. Module de batterie selon la revendication 1, dans lequel le connecteur (300) comporte en outre un organe d'accouplement (B) pénétrant dans le boîtier de module (200) et accouplant la première partie (312) et la deuxième partie (314) l'une à l'autre.

8. Module de batterie selon la revendication 1, dans lequel une surface latérale du boîtier de module (200) présentant le connecteur (300) est inclinée vers le bas.

9. Bloc-batterie comprenant au moins un module de batterie selon l'une quelconque des revendications 1 à 8.

10. Véhicule électrique comprenant au moins un bloc-batterie selon la revendication 9.
